# EUROPÄISCHE PATENTSCHRIFT

(11) **EP 2 023 184 B1**
(45) Veröffentlichungstag und Bekanntmachung des Hinweises auf die Patenterteilung: **22.12.2010**
(21) Anmeldenummer: 08450102.2
(22) Anmeldetag: 04.07.2008
(51) Int. Cl.: G02C 5/22

(54) **Federscharnier für eine Brille**
Spring hinge for spectacles
Charnière à ressort pour lunettes

(30) Priorität: 27.07.2007 AT 11862007
(43) Veröffentlichungstag der Anmeldung: 11.02.2009
(73) Patentinhaber: Redtenbacher Präzisionsteile Ges. M.B.H., 4644 Scharnstein (AT)
(72) Erfinder: Buchegger, Harald, 4871 St. Konrad (AT)
(74) Vertreter: Hübscher, Helmut

(56) Entgegenhaltungen:
- AT-A4- 502 196
- AT-B- 404 193
- DE-C1- 4 415 308
- DE-U1- 8 117 403
- GB-A- 2 248 121

## Beschreibung

Die Erfindung bezieht sich auf ein Federscharnier für eine Brille mit einem in einem bügelseitigen Gehäuse in Bügellängsrichtung verschiebbar geführten, mittigen Scharnierlappen und mit einem vom Scharnierlappen in Verschieberichtung abstehenden, in eine Gehäuseausnehmung eingreifenden, U-förmigen Gleitstück, das zwischen seinen beiden Schenkeln eine Schraubenfeder aufnimmt, die sich mit einem Ende am die beiden Schenkel des U-förmigen Gleitstückes verbindenden Steg und mit dem anderen Ende an einem Widerlager abstützt, das im Gehäuse durch eine zur Schraubenfeder koaxiale Drehverstellung lösbar gehalten ist, wobei der Scharnierlappen eine zur Schraubenfeder koaxial verlaufende Durchtrittsöffnung besitzt.

Um einfache Montagebedingungen bei einem geringen Konstruktionsaufwand sicherstellen zu können, ohne auf eine gute Führung des gegen Federkraft in einem Gehäuse verschiebbaren Scharnierlappens verzichten zu müssen, ist es bei einem Federscharnier für eine Brille mit einem den Scharnierlappen tragenden, U-förmigen Gleitstück, dessen Schenkel eine Schraubenfeder zwischen sich aufnehmen, bekannt (AT 502 196 B1), das für die gehäuseseitige Abstützung der am Steg des U-förmigon Gleitstückes angreifen den Schraubenfeder erforderliche Widerlager durch eine zur Schraubenfeder koaxiale Durchtrittsöffnung durch den Scharnierlappen hindurch in das Gehäuse einzusetzen und in ein Muttergewinde des Gehäuses einzuschrauben. Zufolge dieser Maßnahmen kann im Vergleich zu anderen bekannten Federscharnieren (EP 1 335 236 A1), bei denen das Gleitstück wegen eines gehäusefesten Widerlagers quer zur Verschieberichtung eingesetzt werden muss, ein in Umfangsrichtung geschlossenes Gehäuse zum Einsatz kommen, was ein wesentliche Vorraussetzung für eine möglichst spielfreie Führung für den Scharnierlappen darstellt. Nachteilig ist allerdings, dass die für das Einsetzen des Widerlagers durch den Scharnierlappen hindurch notwendige Durchtrittsöffnung einen vergleichsweise breiten mittleren Scharnierlappen und damit eine entsprechende Mindestbreite für das Federscharnier bedingt.

Der Erfindung liegt somit die Aufgabe zugrunde, ein Federscharnier der eingangs geschilderten Art für eine Brille so auszugestalten, dass die in Richtung der Scharnierachse gemessene Scharnierbreite deutlich verringert werden kann, ohne auf ein in Umfangsrichtung geschlossenes Gehäuse mit einem in Verschieberichtung lösbaren Widerlager für die Schraubenfeder verzichten zu müssen.

Die Erfindung löst die gestellte Aufgabe dadurch, dass das quer zur Verschieberichtung zwischen die Schenkel des Gleitstückes eingesetzte Widerlager einen größeren Durchmesser als die im Scharnierlappen vorgesehene Durchtrittsöffnung zum Einführen eines Werkzeuges zur Drehverstellung des Widerlagers aufweist.

Das Einsetzen des Widerlagers für die Schraubenfeder zwischen die Schenkel des Gleitstückes quer zur Verschieberichtung behindert die Montage des Federscharniers in Verschieberichtung nicht, weil sich für den Scharnierlappen und das zusammen mit der Schraubenfeder zwischen die Schenkel des Gleitstückes des Scharnierlappens eingesetzte Widerlager eine vormontierbare Montageinheit ergibt, die in Verschieberichtung in die hiefür vorgesehene Gehäuseausnehmung eingesetzt werden kann. Da das Widerlager durch die Durchtrittsöffnung im Scharnierlappen für einen Werkzeugangriff zugängig bleibt, kann das Widerlager mit dem Gehäuse nach dem Einsetzen des Scharnierlappens in die Gehäuseausnehmung durch eine Drehverstellung axial festgelegt werden, sodass das Gleitstück des Scharnierlappens durch die sich am Widerlager abstützende und an seinem die beiden Schenkel verbindenden Steg angreifende, unter einer Druckvorspannung gehaltene Schraubenfeder bis auf Anschlag in das Gehäuse eingezogen wird. Der Durchmesser des quer zur Verschieberichtung zwischen die Schenkel des Gleitstückes eingesetzten Widerlagers bestimmt jedoch nicht den Durchmesser der koaxial zur Schraubenfeder verlaufenden Durchtrittsöffnung im Scharnierlappen, die ja bloß den Durchgriff eines Werkzeuges zur Drehverstellung des Widerlagers sicherstellen muss und daher einen entsprechend kleineren Durchmesser mit der Folge aufweisen kann, dass der Scharnierlappen schmäler ausgebildet und demzufolge ein schlankeres Federscharnier gefertigt werden kann.

Damit die Drehverstellung des Widerlagers insbesondere bei seiner Festlegung im Gehäuse mit Hilfe eines Werkzeuges erleichtert werden kann, kann die Durchtrittsöffnung im Scharnierlappen auf der Seite des Gleitstückes eine Drehhalterung für das Widerlager bilden, das aufgrund seiner Beaufschlagung durch die Schraubenfeder zunächst in diese Drehhalterung gedrückt wird und innerhalb der Drehhalterung koaxial zur Durchtrittsöffnung verdreht werden kann. Die Verbindung des Widerlagers mit dem Gehäuse kann in an sich bekannter Weise durch ein Einschrauben des Widerlagers in ein zur Schraubenfederachse koaxiales Muttergewinde des Gehäuses hergestellt werden. Einfachere Montagebedingungen ergeben sich allerdings, wenn das Widerlager radiale Riegelansätze aufweist, die mit einer axiale Durchtritte für die Riegelansätze bildenden Umfangsnut des Gehäuses nach Art eines Bajonettverschlusses zusammenwirken. In diesem Fall kann das Widerlager anschlagbegrenzt zwischen einer Ver- und einer Entriegelungsstellung verdreht werden.

In der Zeichnung ist der Erfindungsgegenstand beispielsweise dargestellt. Es zeigen
- Fig. 1: einen federnden Scharnierteil eines erfindungsgemäßen Federscharniers für eine Brille in einem vereinfachten Längsschnitt,
- Fig. 2: eine aus dem Scharnierlappen und dem zusammen mit der Schraubenfeder zwischen die Schenkel des Gleitstückes des Scharnierlappens eingesetzten Widerlager gebildete Montageeinheit in einer zum Teil aufgerissenen Draufsicht und die
- Fig. 3 und 4: einen Schnitt nach der Linie III-III der Fig. 1 mit dem Widerlager in einer Ent- und einer Verriegelungsstellung in einem größeren Maßstab.

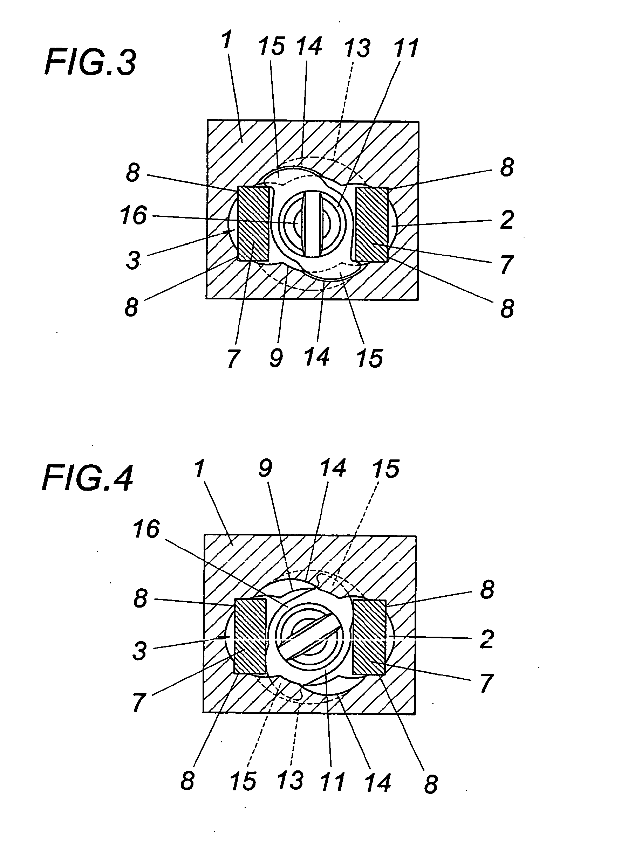

Der dargestellte Scharnierteil eines erfindungsgemäßen Federscharniers für eine Brille weist ein an einem Brillenbügel befestigbares Gehäuse 1 mit einer Gehäuseausnehmung 2 für ein U-förmiges Gleitstück 3 auf, das in der Gehäuseausnehmung 2 verschiebbar geführt und mit einem mittleren Scharnierlappen 4 verbunden ist. Dieser Scharnierlappen 4 greift zwischen zwei seitliche Scharnierlappen des anderen nicht dargestellten Scharnierteils ein und ist mit diesen seitlichen Scharnierlappen durch eine Scharnierachse verbunden, die den mittleren Scharnierlappen 4 in einem Lagerauge 5 durchsetzt. Das in die Gehäuseausnehmung 2 eingreifende Gleitstück 3 bildet zwei parallele, durch einen Steg 6 miteinander verbundene Schenkel 7, die in seitliche Führungsabschnitten 8 der Gehäuseausnehmung 2 eingreifen, wie dies den Fig. 3 und 4 zu entnehmen ist. Aus Gründen der einfacheren Herstellbarkeit setzt sich die Gehäuseausnehmung 2 im Wesentlichen aus drei einander überschneidenden, parallelen Bohrungen zusammen, deren mittlere mit 9 bezeichnet ist.

Die Schenkel 7 des Gleitstückes 3 nehmen eine Schraubenfeder 10 zwischen sich auf, die sich mit ihrem einen Ende am Steg 6 des Gleitstückes 3 und mit ihrem anderen Ende an einem Widerlager 11 abstützt, das einen Führungsbolzen 12 für die Schraubenfeder 10 bildet und gegenüber dem Gehäuse 1 in axialer Richtung festgelegt wird. Zu diesem Zweck weist das Gehäuse 1 im Bereich der mittleren Bohrung 9 der Gehäuseausnehmung 2 eine Umfangsnut 13 auf, die mit axialen Durchtritten 14 für radiale Riegelansätze 15 des um die Achse der Schraubenfeder drehverstellbaren Widerlagers 11 versehen ist, sodass die Riegelansätze 15 des Widerlagers 11 mit der Umfangsnut 13 in der Gehäuseausnehmung 2 nach Art eines Bajonettverschlusses zusammenwirken können.

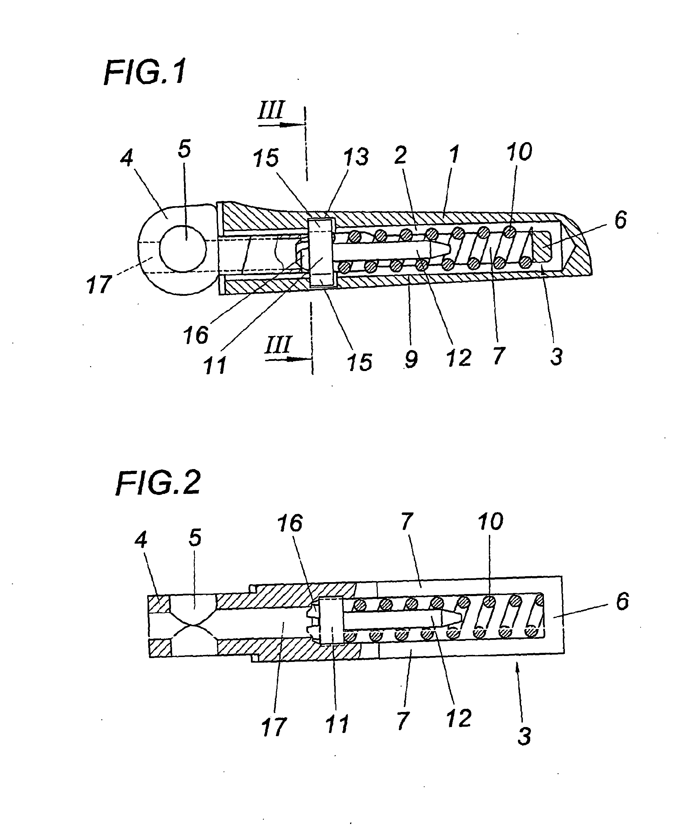

Zur Montage des dargestellten Scharnierteils wird zunächst das Widerlager 11 mit der auf den Führungsbolzen 12 aufgeschobenen Schraubenfeder 10 zwischen die Schenkel 7 des Gleitstückes 3 eingesetzt, wie dies die Fig. 2 veranschaulicht. Dabei kommt das Widerlager 11 mit einem Betätigungsansatz 16 für den Angriff eines Werkzeuges zur Drehverstellung des Widerlagers 11 im Bereich einer quer zum Lagerauge 5 verlaufenden, koaxial zur Schraubenfeder 10 ausgerichteten Durchtrittsöffnung 17 zu liegen, die auf der Seite des Gleitstückes 3 eine Drehhalterung für das Widerlager 11 bildet, in die das Widerlager mit dem Betätigungsansatz 16 durch die Schraubenfeder 10 eingedrückt und drehbar gehalten wird. Der mittlere Scharnierlappen 4 mit dem Gleitstück 3 und dem zusammen mit der Schraubenfeder 10 zwischen die Schenkel 7 des Gleitstückes 3 eingesetzten Widerlager 11 ergeben somit eine vormontierte Montageeinheit, die in die Gehäuseausnehmung 2 von der offenen Gehäusestirnseite her axial eingeschoben werden kann, bis die Riegelansätze 15 des Widerlagers 11 durch die axialen Durchtritte 14 in den Bereich der Umfangsnut 13 gelangen. In der Fig. 3 ist diese Drehstellung des Widerlagers dargestellt. Wird nunmehr das Widerlager 11 mit Hilfe eines Werkzeuges, beispielsweise eines Schraubenziehers, der durch die Durchtrittsöffnung 17 des Scharnierlappens 4 bis zum Eingriff in den Betätigungsansatz 16 des Widerlagers 11 eingeführt wird, so verdreht, dass die Riegelansätze 15 aus dem Bereich der Durchtritte 14 in den Bereich der geschlossenen Nutwand der Umfangsnut 13 gelangen, so wird das Widerlager 11 gegenüber dem Gehäuse 1 entsprechend der Fig. 4 bajonettartig verriegelt, womit der Montagevorgang abgeschlossen ist. Zur Entriegelung bedarf es lediglich einer gegensinnigen Drehverstellung des Widerlagers 11, um das Widerlager 11 mit seinen Riegelansätzen 15 durch die Durchtritte 14 wieder in axialer Richtung aus dem Bereich der Umfangsnut 13 herausziehen zu können.

Da das Widerlager 11 nicht durch die Durchtrittsöffnung 17 des Scharnierlappens 4 hindurch in das Gehäuse 1 eingesetzt werden muss, sondern diese Durchtrittsöffnung 17 lediglich für den axialen Durchgriff eines Werkzeuges zur Drehverstellung des Widerlagers 11 dient, kann der Durchmesser dieser Durchtrittsöffnung 17 erheblich kleiner als der des Widerlagers 11 ausfallen, was die Möglichkeit eröffnet, den mittleren Scharnierlappen 4 schmäler auszubilden und damit Federscharniere zu fertigen, die eine geringere Gesamtbreite in Richtung der Scharnierachse aufweisen.

## Patentansprüche

1. Federscharnier für eine Brille mit einem in einem bügelseitigen Gehäuse (1) in Bügellängsrichtung verschiebbar geführten, mittigen Scharnierlappen (4) und mit einem vom Scharnierlappen (4) in Verschieberichtung abstehenden, in eine Gehäuseausnehmung (2) eingreifenden, U-förmigen Gleitstück (3), das zwischen seinen beiden Schenkeln (7) eine Schraubenfeder (10) aufnimmt, die sich mit einem Ende am die beiden Schenkel (7) des U-förmigen Gleitstückes (3) verbindenden Steg (6) und mit dem anderen Ende an einem Widerlager (11) abstützt, das im Gehäuse (1) durch eine zur Schraubenfeder (10) koaxiale Drehverstellung lösbar gehalten ist, wobei der Scharnierlappen (4) eine zur Schraubenfeder (10) koaxial verlaufende Durchtrittsöffnung (17) besitzt, **dadurch gekennzeichnet, dass** das quer zur Verschieberichtung zwischen die Schenkel (7) des Gleitstückes (3) eingesetzte Widerlager (11) einen größeren Durchmesser als die im Scharnierlappen (4) vorgesehene Durchtrittsöffnung (17) zum Einführen eines Werkzeuges zur Drehverstellung des Widerlagers (11) aufweist.

2. Federscharnier nach Anspruch 1, **dadurch gekennzeichnet, das** die Durchtrittsöffnung (17) im Scharnierlappen (4) auf der Seite des Gleitstückes (3) eine Drehhalterung für das Widerlager (11) bildet.

3. Federscharnier nach Anspruch 1 oder 2, **dadurch gekennzeichnet, dass** das Widerlager (11) radiale Riegelansätze (15) aufweist, die mit einer axiale Durchtritte (14) für die Riegelansätze (15) bildenden Umfangsnut (13) des Gehäuses (1) nach Art eines Bajonettverschlusses zusammenwirken.

## Claims

1. Spring hinge for spectacles having a central hinge tab (4) which is guided so as to be displaceable in a earpiece-side housing (1) in the ear-piece longitudinal direction, and having a U-shaped sliding piece (3) which protrudes from the hinge tab (4) in the displacement direction, engages into a housing recess (2) and receives a helical spring (10) between its two limbs (7), said helical spring being supported at one end on the web (6), which connects the two limbs (7) of the U-shaped sliding piece (3), and at the other end on an abutment (11) which is releasably held in the housing (1) by a rotational adjustment which is coaxial with respect to the helical spring (10), wherein the hinge tab (4) comprises a through-opening (17) extending coaxially with respect to the helical spring (10), **characterised in that** the abutment (11) which is inserted transversely with respect to the displacement direction between the limbs (7) of the sliding part (3) has a greater diameter than the through-opening (17) provided in the hinge tab (4) for insertion of a tool for the rotational adjustment of the abutment (11).

2. Spring hinge as claimed in claim 1, **characterised in that** the through-opening (17) in the hinge tab (4) forms a rotational retainer for the abutment (11) on the side of the sliding piece (3).

3. Spring hinge as claimed in claim 1 or 2, **characterised in that** the abutment (11) has radial bolt projections (15) which cooperate in the manner of a bayonet fitting with a circumferential groove (13) of the housing (1), which circumferential groove forms axial passages (14) for the bolt projections (15).

## Revendications

1. Charnière à ressort pour lunettes avec une languette de charnière (4) centrale, guidée de manière déplaçable dans la direction longitudinale de branche dans un boîtier (1) situé côté branche, et avec une pièce de glissement (3) en forme de U, s'engageant dans un évidement (2) du boîtier, s'étendant à partir de la languette de charnière (4) dans la direction de déplacement, pièce de glissement (3) recevant entre ses deux branches (7) un ressort hélicoïdal (10) prenant appui, par une extrémité, sur la barrette (6) reliant les deux branches (7) de la pièce de glissement (3) en forme de U et, par l'autre extrémité, sur un contre-palier (11), maintenu dans le boîtier (1), de manière désolidarisable, au moyen d'un dispositif de réglage en rotation coaxial au ressort hélicoïdal (10), la languette de charnière (4) comprenant une ouverture de passage (17) s'étendant coaxialement au ressort hélicoïdal (10), **caractérisé en ce que** le contre-palier (11), inséré transversalement à la direction de déplacement entre les branches (7) de la pièce de glissement (3), présente un plus gros diamètre que l'ouverture de passage (17), prévue dans la languette de charnière (4), pour l'insertion d'un outil servant au réglage du contre-palier (11).

2. Charnière à ressort selon la revendication 1, **caractérisé en ce que** l'ouverture de passage (17) prévue dans la languette de charnière (4) forme, sur le côté de la pièce de glissement (3), une fixation en rotation pour le contre-palier (11).

3. Charnière à ressort selon la revendication 1 ou 2, **caractérisé en ce que** le contre-palier (11) présente des appendices de verrouillage (15), coopérant avec une gorge périphérique (13) du boîtier (1), formant des passages (14) axiaux pour les appendices de verrouillage (15), à la manière d'un verrouillage à baïonnette.
